Europäisches Patentamt

European Patent Office

Office européen des brevets

(19)

(11) Veröffentlichungsnummer: **0 276 409 B1**

(12) # EUROPÄISCHE PATENTSCHRIFT

(45) Veröffentlichungstag der Patentschrift: **27.05.92**

(51) Int. Cl.⁵: **B65G 17/00**, B65H 29/04, B65G 47/26, B65G 54/02

(21) Anmeldenummer: **87117784.6**

(22) Anmeldetag: **02.12.87**

(54) **Taktförderer.**

(30) Priorität: **26.01.87 CH 258/87**

(43) Veröffentlichungstag der Anmeldung:
**03.08.88 Patentblatt 88/31**

(45) Bekanntmachung des Hinweises auf die
Patenterteilung:
**27.05.92 Patentblatt 92/22**

(84) Benannte Vertragsstaaten:
**CH DE FR GB IT LI SE**

(56) Entgegenhaltungen:
**EP-A- 0 054 890**
**DE-C- 575 309**
**US-A- 4 201 286**

(73) Patentinhaber: **Ferag AG**

**CH-8340 Hinwil(CH)**

(72) Erfinder: **Frei, Hans**
**Kreuzlen 505**
**CH-8618 Oetwil am See(CH)**

(74) Vertreter: **Patentanwälte Schaad, Balass & Partner**
**Dufourstrasse 101 Postfach**
**CH-8034 Zürich(CH)**

Rank Xerox (UK) Business Services

EP 0 276 409 B1

## Beschreibung

Die vorliegende Erfindung bezieht sich auf einen Taktförderer gemäss dem Oberbegriff des Patentanspruches 1.

Solche Taktförderer dienen beispielsweise dazu, den gegenseitigen Abstand von in unregelmässigen Abständen vonainander anfallenden Stückgüter zu vergleichmässigen, damit an den Stückgütern weitere, taktmässig erfolgende Arbeitsoperationen durchgeführt werden können.

Ein Taktförderer der eingangs genannten Art ist beispielsweise aus der CH-A-618.398 bzw. aus der weitgehend inhaltsgleichen US-A-4,201,286 bekannt.

Bei dem bekannten Taktförderer sind die Mitnehmer mit gesteuerten Greifern bestückt und mittels Schienen parallel zu sich selbst verschiebbar geführt. Jeder der Mitnehmer ist ausserdem mit einem an sich frei drehbar gelagerten, jedoch mit einer kraftschlüssigen Bremsvorrichtung bremsbaren, Kettenrad versehen, das stets in eine als Zugorgan dienende, endlos umlaufend angetriebene Kette greift. Die Bremsvorrichtung ist so ausgebildet, dass die Bremswirkung aufgehoben wird, wenn einer der Mitnehmer entweder an den Freigabemechanismus oder an einen vorangehenden Mitnehmer anstösst, der seinerseits durch den Freigabemechanismus noch nicht abgerufen wurde, d.h. noch blockiert ist. Dann kann das Kettenrad frei drehen, und damit wird der Mitnehmer von der Kette nicht mitgenommen. Sobald der Freigabemechanismus den vordersten Mitnehmer freigibt, wird dessen Kettenrad durch die Bremsvorrichtung gebremst und, da dieses formschlüssig in die Kette eingreift, von dieser mit einer von der Bremskraft der eigenen Bremsvorrichtung abhängigen Kraft mitgenommen, wobei das Schleusenrad den Abstand zum vorangehenden Mitnehmer bestimmt.

Dieser bekannte Taktförderer und namentlich dessen Mitnehmer sind recht kompliziert gebaute Elemente, die - um funktionstüchtig zu bleiben - der regelmässigen und intensiven Wartung bedürfen. Dies trifft insbesonjede für Bremsvorrichtung an jedem der Mitnehmer zu. Ausserdem erzeugt der bekannte Taktförderer bei seinem Betrieb einen nicht unerheblichen Lärm.

Es ist daher ein Zweck der Erfindung, einen Taktförderer der eingangs genannten Art zu schaffen, der eines erheblich geringeren technischen Aufwandes und einer bescheidenen Wartung bedarf, wobei im Betrieb ausserdem sehr wenig Lärm entstehen soll. Dieser Zweck wird vom vorgeschlagenen Taktförderer dadurch erreicht, dass er die im Kennzeichen des Patentanspruches 1 angegebenen Merkmale aufweist.

Merkmale bevorzugter Ausführungsformen sind den abhängigen Ansprüchen zu entnehmen.

Weitere Vorteile des vorgeschlagenen Taktförderers ergeben sich aus der folgenden Beschreibung von Ausführungsbeispielen anhand der Zeichnung. Es zeigt:

Fig. 1    eine stark verkürzte Seitenansicht eines Taktförderers unter Weglassung der auf der dem Betrachter zugekehrten Seite angeordneten Führungs- und Verschalungselemente,

Fig. 2    in grösserem Massstab einen Schnitt längs der Linie II-II der Fig. 1,

Fig. 3    in grösserem Massstab einen Schnitt längs der Linie III-III der Fig. 1,

Fig. 4    einen Schnitt längs der Linie IV-IV der Fig 1,

Fig. 5    eine Ausführungsvariante der Fig. 4,

Fig. 6    in ähnlicher Darstellung wie Fig. 4 eine weitere Ausführungsvariante, und

Fig. 7    schematisch eine Seitenansicht der Fig. 6.

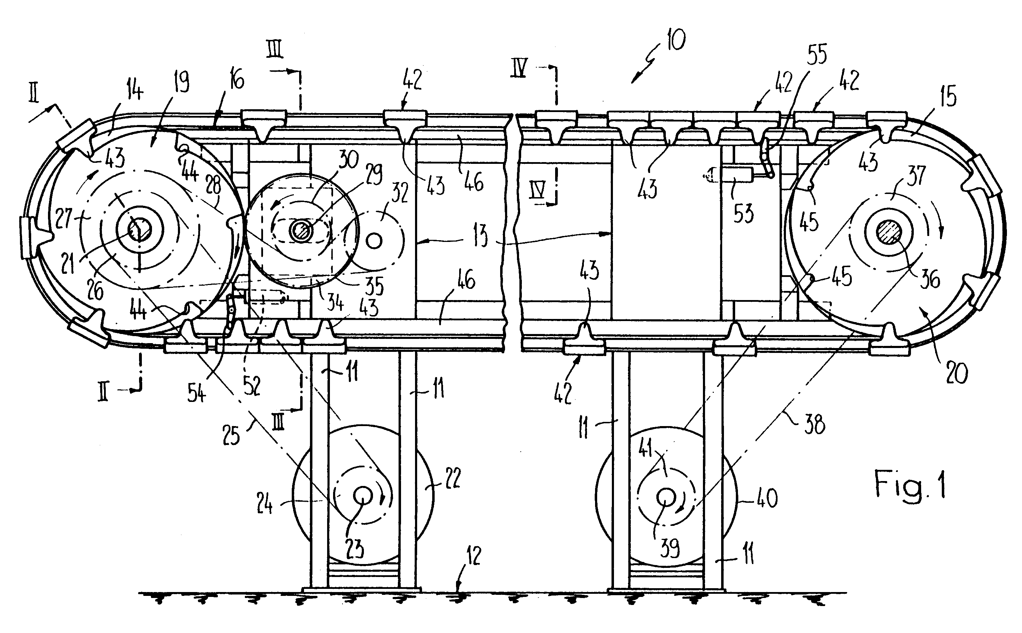

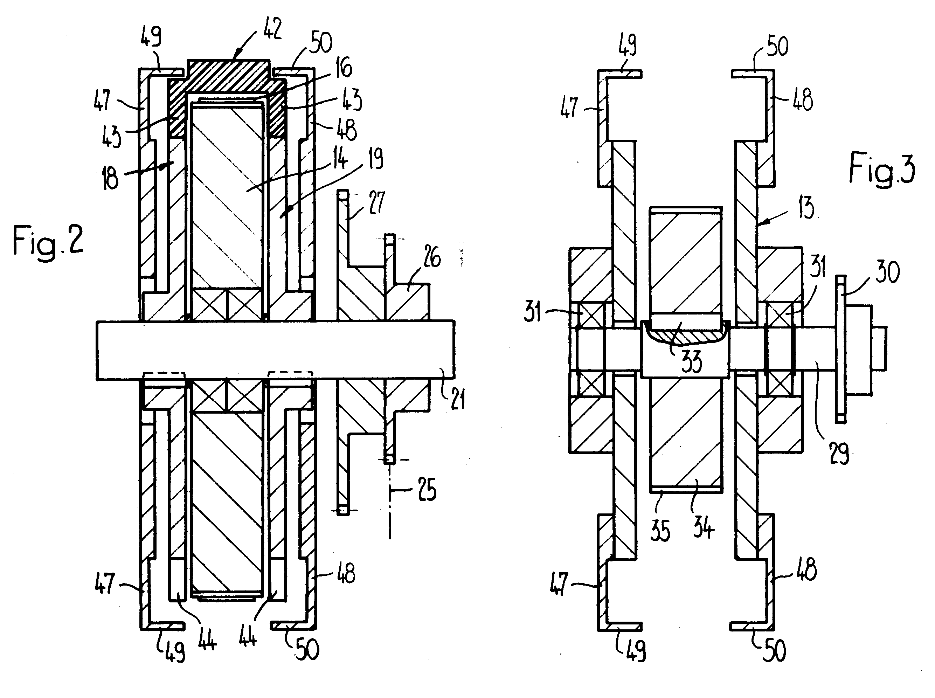

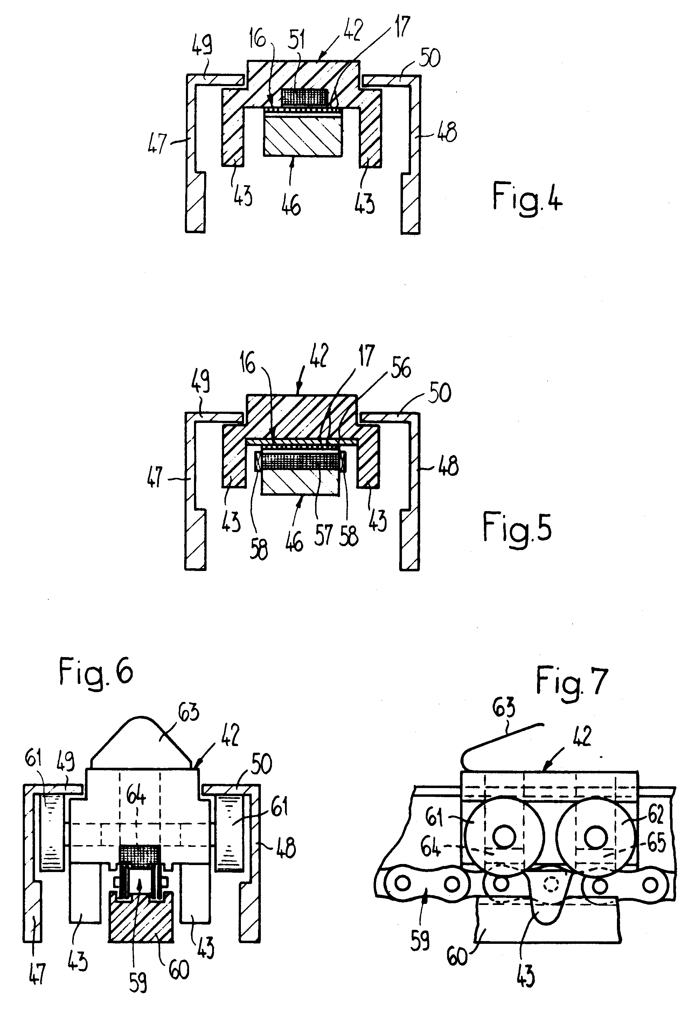

Der in Fig. 1 stark verkürzt dargestellte Taktförderer 10 weist einen über Pfosten 11 auf dem Boden 12 abgestützten Rahmen 13 auf. Im Rahmen 13 sind (vergleiche auch Fig. 2) zwei Umlenkrollen 14, 15 drehbar gelagert, um die ein innenverzahnter Zahnriemen 16 geschlungen ist. Den Fig. 4 und 5 ist zu entnehmen, dass im Zahnriemen 16 metallische, vorzugsweise weichmagnetische Verstärkungseinlagen 17 eingebettet sind. Diese Einlagen 17 dienen unter anderem auch dazu, eine Dehnung des Zahnriemens 16 zu verhindern.

Die auf einer Welle 21 drehbar gelagerte, aussenverzahnte Umlenkrolle 14 ist angetrieben und von einem Paar ebenfalls angetriebenen Schleusenrädern 18, 19 (Fig. 2) flankiert, die auf der Welle 21 aufgekeilt sind (Fig. 2). Die nicht notwenigerweise aussenverzahnte Umlenkrolle 15 ist dagegen frei drehbar gelagert, jedoch ebenfalls von einem Paar angetriebener Schleusenrädern 20 (in Fig. 1 ist nur das eine dieser Schleusenräder sichtbar) flankiert.

Ein Motor 22 treibt über ein auf seiner Abtriebswelle 23 sitzendes Kettenrad 24 und über eine Kette 25 ein auf der Welle 21 sitzendes Kettenrad 26. Auf der Welle 21 sitzt ein weiteres Kettenrad 27, das von einer weiteren Kette 28 (Fig. 1) umschlungen ist. Die Aussenseite dieser Kette 28 umschlingt ein auf einer weiteren Welle 29 sitzendes Kettenrad 30 (Fig. 3), welche Welle in Wälzlagern 31 im Rahmen 13 gelagert ist. Vom Kettenrad 30 führt die Kette 28 um ein frei drehbar gelagertes Umlenkrad 32 (Fig. 1) und zurück zum Kettenrad 27. Mittels eines Keiles 33 ist auf der Welle 29 ein Zahnrad 34 aufgekeilt, dessen Verzahnung 35 jener des Umlenkrades 14 entspricht und in diese eingreift. Das Uebersetzungsverhältnis zwischen den Kettenrädern 24 und 26 einerseits und den Kettenrädern 27, 30 sowie dem Zahnrad 34 und dem Umlenkrad 14 andererseits ist so gewählt, dass die Umfangsgeschwindigkeit der Schleusenräder 18, 19 jene des Umlenkrades 14 vorzugsweise um einen geringen Wert übersteigt.

Die drehfest auf einer Welle 36 sitzenden Schleusenräder 20 (rechts in Fig. 1) sind über ein auf der Welle 36 sitzendes Kettenrad 37, eine Kette 38 und über ein auf der Abtriebswelle 39 eines weiteren Motors 40 sitzendes Kettenrad 41 angetrieben. Die beiden Motoren 22, 40 brauchen nicht stets streng synchron zu laufen, doch ist es im vorliegenden Beispiel vorteilhaft, wenn deren Anzahl Umdrehungen über eine längere Betriebszeit betrachtet sich entsprechen.

Der Fig. 1 ist zu entnehmen, dass der Taktförderer 10 mit einer Vielzahl, hier nur sehr schematisch dargestellten Mitnehmern 42 bestückt ist. Diese Mitnehmer 42 können ihrerseits mit einem dem zu fördernden Stückgut angepassten Fördergeschirr (in Fig. 1 - 5 nicht dargestellt), beispielsweise Haken, Klammern, Greifer (auch gesteuerte) versehen sein. Jeder der Mitnehmer 42 ist mit einem Paar Nocken 43 versehen, mit denen der Mitnehmer 42 den Zahnriemen 16 rittlings übergreift. Diese Nocken 43 sind so geformt, dass sie in umfangsseitig und in gleichmässigen Umfangsabständen in den Schleusenräder 18, 19 sowie 20 ausgebildete Kerben 44 bzw. 45 passen.

Um die Mitnehmer 42 und den Zahnriemen 16 in unmittelbarer Nähe zueinander zu halten, ist der Rahmen 13 mit Führungselementen versehen. Diese Führungselemente weisen einerseits einen Balken 46 auf, der sich über die geradlinigen Trume des Zahnriemens 16 erstreckt, dessen Innenseite auf diesem Balken gleitet. An der Berührungsfläche kann der Zahnriemen und/oder der Balken selbst mit einem reibungsmindernden Belag versehen sein.

Andererseits gehören zu diesen Führungselementen auch Halte- bzw. Führungs-Schienen 47, 48, die zu beiden Seiten längs der gesamten Umlaufbahn des Zahnriemens 16 angeordnet sind. Diese Schienen 47, 48 weisen nach innen umgebogene Randflansche 49 bzw. 50 auf, die eine seitliche Führung der Mitnehmer 42 gewährleisten und diese namentlich in unmittelbarer Nähe des Zahnriemens 16 halten.

In Fig. 4 ist jeder der im wesentlichen aus Kunststoff bestehenden Mitnehmer 42 mit einem Permanentmagneten 51 versehen, der mit den Verstärkungseinlagen 17 im Zahnriemen 16 zusammenwirkt. Verstärkt wird diese Zusammenwirkung durch den Umstand, dass in Fig. 4 der Balken 46 vollständig aus ferromagnetischem Material, beispielsweise aus Stahl, besteht. Sofern der Mitnehmer 42 nun nicht festgehalten ist, ist er magnetisch an den Zahnriemen 16 gekoppelt und wird von diesem mitgenommen.

Der Fig. 1 ist zu entnehmen, dass in den Bereichen, wo der Zahnriemen 16 auf die Umlenkräder 14 bzw. 15 aufläuft, ein durch ein magnetisches oder pneumatisches Betätigungselement 52 bzw. 53 in die Umlaufbahn der Mitnehmer 42 bzw. deren Nocken 43 einrückbarer und ausrückbarer Halteriegel 54 bzw. 55 in Form eines zweiarmigen Hebels vorgesehen ist. Ist dieser Halteriegel eingerückt, sind die Mitnehmer 42 daran gehindert, von dem weiterlaufenden Zahnriemen 16 mitgenommen zu werden. Dies ist ohne weiteres möglich, denn der Kraftschluss zwischen der äusseren, glatten Seite des Zahnriemens 16 und der diesen zugekehrten Seite der Mitnehmer ist ein reiner Reibschluss zwischen zwei ebenen Flächen. Wird dagegen der Halteriegel 54 (oder 55) für kurze Zeit, d.h. impulsartig, ausgerückt, läuft der unmittelbar anstehende Mitnehmer 42 mit dem Zahnriemen 16 auf das Umlenkrad 14 (bzw. 15) auf und wird dort von dem etwas schneller laufenden Schleusenrädern 18, 19 (bzw. 20) "eingeholt", so dass die Nocken 43 des nun freigegebenen Mitnehmers 42 in eine der Kerben 44 (bzw. 45) zu liegen kommt. Damit ist der Abstand zum vorangegangenen Mitnehmer 42 definiert und bleibt auch auf den geradlinigen Trumen des Zahnriemens 16 definiert, bis der Mitnehmer auf den hintersten der am Halteriegel 55 (bzw. 54) anstehenden Reihe von Mitnehmern anstösst. Dann gleitet der konstant laufende Zahnriemen 16 an dem blockierten Mitnehmern 42 vorbei.

Die Ausführungsform der Fig. 5 unterscheidet sich von jener der Fig. 4 dadurch, dass der Mitnehmer 42 nicht mit einem Permanentmagneten versehen ist, sondern eine weichmagnetische Platte 56 trägt. Dagegen ist der Balken 46 auf seiner dem Zahnriemen 16 zugekehrten Seite mit einer Magnetleiste 57 versehen, die ihrerseits beispielsweise aus aneinandergereihten Permanentmagneten bestehen oder aber auch fremderregt sein kann, wie dies mit der Wicklung 58 angedeutet ist.

Eine weitere Ausführungsform ist in den Fig. 6 und 7 dargestellt. Hier ist das endlose, umlaufend angetriebene Zugorgan nicht durch einen Zahnriemen gebildet, sondern durch eine herkömmliche Rollenkette 59, die in den geradlinig verlaufenden Trumen gleitend auf einer Schiene 60 aus Kunststoff geführt ist. Es versteht sich dass bei dieser Ausführungsform die Umlenkrollen 14, 15 durch entsprechende Kettenräder zu ersetzen sind. Die Mitnehmer 42 sind mit zwei Paaren von Rollen 61, 62 versehen, die sich an der Innenseite der Randflansche 49, 50 abwälzen.

Die hier einen Förderhaken 63 tragenden Mitnehmer 42 sind mit zwei Permanentmagneten 64, 65 bestückt, die unmittelbar mit der aus Stahl bestehenden Rollenkette 59 zusammenwirken. Interessant ist bei dieser Ausführungsform insbesondere, dass dort wo ein Mitnehmer 42 vorhanden ist, die Kette 59 von ihrer Schiene 60 sozusagen abgehoben wird, auf alle Fälle aber eine geringere Reibung zur Schiene 60 zu überwinden hat. Ist der Mitnehmer 42 ausserdem durch einen der Halteriegel 54, 55 am Mitlaufen mit der Kette 59 gehindert, so wälzen sich die Rollen der weiterlaufenden Kette 59 an der ihnen zugekehrten Fläche der Mitnehmer 42 und namentlich der Permanentmagnete 64, 65 ab.

Falls bei dem in Fig. 1 dargestellten Taktförderer nur das obere, von links nach rechts laufende Trum als förderwirksam benützt wird, erübrigen sich der Freigabemechanismus 53, 55 und die Schleusenräder 20 sowie deren Antrieb. Die Mitnehmer 42 werden sich dann erst beim Anstehen an den Halteriegel 54 aufstauen.

In der Zeichnung nicht dargestellt sind die dem einen und/oder dem anderen Trum zugeordnete Gleittische oder Förderbänder auf denen die von den Mitnehmern 42 bzw. von dem diesen zugeordneten Fördergehänge erfassten Stückgüter gleiten bzw. begleitend abgestützt sind.

## Patentansprüche

1. Taktförderer mit einer Vielzahl von entlang einer Umlaufbahn bewegbaren Mitnehmern (42), die mittels eines Freigabemechanismus (52, 54, 53, 55) einzeln abrufbar und mittels wenigstens eines Schleusenrades (18, 19, 20) einzeln und in regelmässigen Abständen nacheinander an ein endloses, umlaufend angetriebenes Zugorgan (16, 59) koppelbar und die in einem, in Förderrichtung gesehen dem Schleusenrad (18, 19, 20) folgenden Mitnahmebereich an das Zugorgan (16, 59) gekoppelt sind, dadurch gekennzeichnet, dass das Zugorgan (16, 59) im Mitnahmebereich an seiner den Mitnehmern (42) abgekehrten Seite über ein schienenartiges Führungselement (42, 46, 60) geführt ist um das Zugorgan (16, 59) in Umlaufbahnnähe zu halten, und dass zum kraftschlüssigen Koppeln der mitnehmer (42) an das Zugorgan (16, 59) die Mitnehmer (42), das Zugorgan (16, 59) und gegebenenfalls das Führungselement (42, 60) mit ferromagnetischem Material ausgestattet sind, wobei entweder die Mitnehmer (42) oder das Führungselement (46) zum Erzeugen eines Magnetfeldes ausgebildet sind.

2. Taktförderer nach Patentanspruch 1, dadurch gekennzeichnet, dass das Zugorgan durch einen Riemen (16) gebildet, und dass die Mitnehmer (42) den Riemen (16) übergreifen und an ihrer dem Riemen (16) zugekehrten Seite mit wenigstens einem Permanentmagneten (51) bestückt sind, wobei der Riemen mit ferromagnetischen Elementen versehen ist.

3. Taktförderer nach Patentanspruch 2, dadurch gekennzeichnet, dass im Riemen (16) weichmagnetische, biegsame Verstärkungseinlagen (17) eingebettet sind.

4. Taktförderer nach Patentanspruch 2 oder 3, dadurch gekennzeichnet, dass das Führungselement (46) mit weichmagnetischem Material ausgestattet ist und der Riemen (16) zumindest längs des förderwirksamen Trums gleitend über das Führungselement (46) geführt ist.

5. Taktförderer nach Patentanspruch 1, dadurch gekennzeichnet, dass das Zugorgan durch einen Riemen (16) gebildet ist und die Mitnehmer (42) den Riemen (16) übergreifen und an ihrer dem Riemen (16) zugekehrten Seite mit einer weichmagnetischen Platte (56) versehen sind, und dass das Führungselement (46) eine Magnetschiene (57) aufweist über die der Riemen (16) gleitend geführt ist.

6. Taktförderer nach Patentanspruch 5, dadurch gekennzeichnet, dass die Magnetschiene (57) fremderregt ist.

7. Taktförderer nach einem der Patentansprüche 2 bis 6, dadurch gekennzeichnet, dass der Riemen ein Zahnriemen (16) ist, der über eine Zahnriemenscheibe (14) antreibbar ist, wobei die Zahnriemenscheibe (14) gleichachsig zwischen einem Paar Schleusenräder (18, 19) angeordnet ist, und vorzugsweise das Führungselement (46, 60) ausschliesslich ausserhalb des Wirkbereichs der Schleusenräder (18, 19) vorgesehen ist.

8. Taktförderer nach Patentanspruch 1, bei dem das Zugorgan durch eine Rollenkette (59) gebildet ist, dadurch gekennzeichnet, dass die Mitnehmer (42) die im als Führungsschiene (60), insbesondere aus Kunststoff ausgebildeten Führungselement, geführte Rollenkette (59) übergreifen und an ihrer der Rollenkette (59) zugekehrten Seite mit wenigstens einem Permanentmagneten (64, 65) bestückt sind.

9. Taktförderer nach einem der Patentansprüche 1 bis 8, dadurch gekennzeichnet, dass die Mitnehmer (42) mittels Rollen (41, 42) an Führungsschienen (49, 50) geführt sind.

10. Taktförderer nach einem der Patentansprüche 2 bis 7, dadurch gekennzeichnet, dass der Riemen (16) an seiner den Mitnehmern (42) zugekehrten Seite und/oder die Mitnehmer (42) an ihrer dem Riemen (16) zugekehrten Seite mit einem den gegenseitigen Reibschluss fördernden Belag versehen ist bzw. sind.

11. Taktförderer nach Patentanspruch 4 oder 5, dadurch gekennzeichnet, dass das Führungselement (46) bzw. die Magnetschiene (57) auf ihrer dem Riemen (16) zugekehrten Seite mit einem Gleitbelag versehen ist.

12. Taktförderer nach Patentanspruch 7, bei dem die Schleusenräder (18, 19; 20) an ihrem Umfang mit in regelmässigen Umfangsabständen angeordneten Kerben (44, 45) versehen sind, in welche jeweils an einem der abgerufenen Mitnehmer (42) angeformte Vorsprünge (43) eingreifen, dadurch gekennzeichnet, dass die Schleusenräder (18, 19; 20) mit einer geringfügig grösseren Umfangsgeschwindigkeit als die Zahnriemenscheibe (14, 15) angetrieben sind.

13. Taktförderer nach Patentanspruch 5, dadurch gekennzeichnet, dass die Magnetschiene (57) permanentmagnetisch ist.

**Claims**

1. A clock conveyor having a multiplicity of entrainment members (42) which are movable along a circular path and which can be called for individually by means of a release mechanism (52, 54, 53, 55) and can be coupled by means of at least one shuttle wheel (18, 19, 20) individually and at uniform intervals successively to an endless, revolvingly driven traction member (16, 19) and which are coupled to the traction member (16, 59) in an entrainment region following the shuttle wheel (18, 19, 20) as seen in the conveying direction, characterised in that the traction member (16, 59) in the entrainment region at its side remote from the entrainment members (42) is conducted over a rail-like guide element (42, 46, 60) in order to keep the traction member (16, 59) in the vicinity of the circular path, and in that for the force-locking coupling of the entrainment members (42) to the traction member (16, 59) the entrainment members (42), the traction member (16, 59) and possibly the guide element (42, 60) are equipped with ferromagnetic material, either the entrainment members (42) or the guide element (46) being designed to produce a magnetic field.

2. A clock conveyor according to Claim 1, characterised in that the traction member is formed by a belt (16), and in that the entrainment members (42) engage over the belt (16) and on their side facing the belt (16) are equipped with at least one permanent magnet (51), the belt being provided with ferromagnetic elements.

3. A clock conveyor according to Claim 2, characterised in that weakly magnetic, flexible reinforcing inserts (17) are embedded in the belt (16).

4. A clock conveyor according to Claim 2 or 3, characterised in that the guide element (46) is equipped with weakly magnetic material and the belt (16) at least along the operative conveying strand is conducted sliding over the guide element (46).

5. A clock conveyor according to Claim 1, characterised in that the traction member is formed by a belt (16) and the entrainment members (42) engage over the belt (16) and on their side facing the belt (16) are provided with a weakly magnetic plate (56), and in that the guide element (46) has a magnetic rail (57) over which the belt (16) is guided in sliding manner.

6. A clock conveyor according to Claim 5, characterised in that the magnetic rail (57) is separately excited.

7. A clock conveyor according to one of Claims 2 to 6, characterised in that the belt is a toothed belt (16), which is drivable by way of a toothed belt pulley (14), the toothed belt pulley (14) being arranged equiaxially between a pair of shuttle wheels (18, 19), and the guide element (46, 60) preferably being provided exclusively outside the operating region of the shuttle wheels (18, 19).

8. A clock conveyor according to Claim 1, wherein the traction member is formed by a roller chain (59), characterised in that the entrainment members (42) engage over the roller chain (59) guided in the guide element fashioned as a guide rail (60), in particular from plastics material, and are equipped, on their side facing the roller chain (59) with at least one permanent magnet (64, 65).

9. A clock conveyor according to one of Claims 1 to 8, characterised in that the entrainment members (42) are guided by means of rollers (41, 42) on guide rails (49, 50).

10. A clock conveyor according to one of Claims 2 to 7, characterised in that the belt (16), on its side facing the entrainment members (42), and/or the entrainment members (42), on their side facing the belt (16), is or are provided with a coating promoting the mutual frictional engagement.

11. A clock conveyor according to Claim 4 or 5, characterised in that the guide element (46) or respectively the magnetic rail (57) is provided on its side facing the belt (16) with a slip coating.

12. A clock conveyor according to Claim 7, in the case of which the shuttle wheels (18, 19, 20) are provided at their periphery with notches (44, 45) which are arranged at regular peripheral intervals and into which engage projections (43) integrally formed on each of the called-for entrainment members (42), characterised in that the shuttle wheels (18, 19, 20) are driven at a slightly greater peripheral speed than the toothed belt pulley (14, 15).

13. A clock conveyor according to Claim 5, characterised in that the magnetic rail (57) is permanently magnetic.

**Revendications**

1. Convoyeur pour l'alimentation intermittente avec plusieurs entraîneurs (42) mobiles le long d'une trajectoire, qui peuvent être appelés individuellement au moyen d'un mécanisme de déblocage (52, 54, 53, 55), être couplés individuellement, à distances régulières, et successivement, à un organe de traction sans fin (16, 59) entraîné en rotation, au moyen d'une roue de transfert au moins (18, 19, 20), et sont couplés à l'organe de traction (16, 59) dans une zone d'entraînement qui suit la roue de transfert (18, 19, 20), vu dans le sens de transport, caractérisé en ce que l'organe de traction (16, 59) est guidé dans la zone d'entraînement, sur sa face opposée aux entraîneurs (42), par un élément de guidage en forme de rail (42, 46, 60), afin de maintenir l'organe de traction (16, 59) au voisinage de la trajectoire, et en ce que les entraîneurs (42), l'organe de traction (16, 59) et l'élément de guidage (42, 60), éventuellement, sont munis d'un matériau ferromagnétique, en vue d'accoupler par force d'adhérence les entraîneurs (42) et l'organe de traction (16, 59), les entraîneurs (42), ou l'élément de guidage (46), étant a lors réalisés pour produire un champ magnétique.

2. Convoyeur pour l'alimentation intermittente suivant la revendication 1, caractérisé en ce que l'organe de traction est formé par une courroie (16), et en ce que les entraîneurs (42) enjambent la courroie (16) et sont munis d'un aimant permanent (51) au moins, sur leur face tournée vers la courroie (16), cette dernière étant dotée d'éléments ferromagnétiques.

3. Convoyeur pour l'alimentation intermittente suivant la revendication 2, caractérisé en ce que des inserts de renforcement (17) flexibles, magnétiques doux, sont encastrés dans la courroie (16).

4. Convoyeur pour l'alimentation intermittente suivant l'une des revendications 2 et 3, caractérisé en ce que l'élément de guidage (46) est muni d'un matériau magnétique doux, la courroie (16) étant guidée par l'intermédiaire de l'élément (46), en glissant le long du brin actif, du moins.

5. Convoyeur pour l'alimentation intermittente suivant la revendication 1, caractérisé en ce que l'organe de traction est formé par une courroie (16), les entraîneurs (42) enjambant la courroie (16), et étant munis d'une plaque magnétique douce (56) sur leur face tournée vers la courroie (16), et en ce que l'élément de guidage (46) présente un rail magnétique (57), par l'intermédiaire duquel est guidée la courroie (16), en glissant.

6. Convoyeur pour l'alimentation intermittente suivant la revendication 5, caractérisé en ce que le rail magnétique (57) est soumis à une excitation indépendante.

7. Convoyeur pour l'alimentation intermittente suivant l'une quelconque des revendications 2 à 6, caractérisé en ce que la courroie est une courroie dentée (16), qu'une poulie à courroie dentée (14) permet d'entraîner, la poulie (14) étant montée, d'une manière coaxiale, entre une paire de roues de transfert (18, 19), et l'élément de guidage (46, 60) étant prévu, de préférence, exclusivement à l'extérieur de la zone d'action des roues de transfert (18, 19).

8. Convoyeur pour l'alimentation intermittente suivant la revendication 1, sur lequel l'organe de traction est formé par une chaîne à rouleaux (59), caractérisé en ce que les entraîneurs (42) enjambent la chaîne à rouleaux (59), guidée dans un élément réalisé sous forme de rail de guidage (60), en plastique notamment, et sont munis d'un aimant permanent au moins (64, 65) sur leur face tournée vers la chaîne à rouleaux (59).

9. Convoyeur pour l'alimentation intermittente suivant l'une quelconque des revendications 1 à 8, caractérisé en ce que les entraîneurs (42) sont guidés sur des rails de guidage (49, 50) au moyen de galets (61, 62).

10. Convoyeur pour l'alimentation intermittente suivant l'une quelconque des revendications 2 à 7, caractérisé en ce que la courroie (16), sur sa face tournée vers les entraîneurs (42), et/ou les entraîneurs (42), sur leur face tournée vers la courroie (16), est et/ou sont munis d'une garniture favorisant la friction mutuelle.

11. Convoyeur pour l'alimentation intermittente suivant l'une des revendications 4 et 5, caractérisé en ce que l'élément de guidage (46) et/ou le rail magnétique (57) sont munis d'un revêtement de glissière sur leur face tournée vers la courroie (16).

12. Convoyeur pour l'alimentation intermittente suivant la revendication 7, sur lequel les roues de transfert (18, 19; 20) sont munies, sur leur pourtour, d'encoches (44, 45) disposées à distances régulières, dans lesquelles s'engagent des saillies (43), respectivement formées sur l'un des entraîneurs (42) appelés, caractérisé en ce que les roues de transfert (18, 19; 20) sont entraînées à une vitesse périphérique légèrement supérieure à celle de la poulie à courroie dentée (14, 15).

13. Convoyeur pour l'alimentation intermittente suivant la revendication 5, caractérisé en ce que le rail magnétique (57) est à aimants permanents.

Fig. 1

EP 0 276 409 B1

Fig.3

Fig.2

Fig. 4

Fig. 5

Fig. 6

Fig. 7